# EUROPEAN PATENT APPLICATION

(11) **EP 2 957 508 A1**
(43) Date of publication of application: **23.12.2015**
(21) Application number: 15165881.2
(22) Date of filing: 22.06.2012
(51) Int. Cl.: B65B 51/10, B65B 9/06, B65B 51/22, B65D 75/40, B65B 51/04, B65B 51/08, B65D 75/12, B65D 33/16, B65D 77/18, B65B 9/12, B65B 9/20, B29C 65/08, B29C 65/10, B29C 65/00, B29C 65/04, B65B 51/26, B29L 23/00, B65B 51/30

(54) **SEALED PACKAGE BODY, AND METHOD AND APPARATUS FOR PRODUCING SAME**

(30) Priority: 28.06.2011 JP 2011142954; 28.06.2011 JP 2011142957
(62) Divisional of application: 12804756.0
(71) Applicant: Asahi Kasei Chemicals Corporation, Tokyo 101-8101 (JP)
(72) Inventor: ICHIKAWA, Katsuhiko, Chiyoda-ku, Tokyo 101-8101 (JP); TAZUKE, Yoshiyuki, Chiyoda-ku, Tokyo 101-8101 (JP)
(74) Representative: D Young & Co LLP

(57) **Abstract**

The invention is a sealed package body (1) including a first sealed portion (4) that configures a tubular film (2), which is formed by bending a belt-like synthetic resin film in a tube shape so as to make both side edge portions of the film overlapped and fusing an overlapped portion (3) in a longitudinal direction of the film, thereby storing a content (5), second sealed portions formed at both end portions (6) of the tubular film and formed by fusing each inside surfaces of the tubular film across an entire length of the tubular film in a width direction, and tying members (8) that are respectively formed at both end portions of the tubular film and tie both end portions that are converged together.

According to the invention, a sealed package body that is sufficiently resistant to heating-induced damage during a production process and has excellent airtightness is provided.

## Description

### Technical Field

The present invention relates to a sealed package body, a method and an apparatus for producing the same.

### Background Art

The use of synthetic resin films for sealed package bodies that house ham, sausage, cheese, sweet jelly of beans, uirou and the like is widely known. The sealed package bodies are produced by making a belt-like synthetic resin film traveled and bent in a tube shape so that both side edge portions are crossed and overlapped, sealing the overlapped portion so as to form a tubular film, filling the tubular film with a content, and then tying (sealing) the top end and the bottom end using an automatic filling and packaging machine (for example, ADP (registered trademark) manufactured by Asahi Kasei Chemicals Corporation).

There are cases in which produced sealed package bodies are subjected to a heating treatment such as retort processing. At this time, if the sealed portions do not have sufficient airtightness, there are cases in which the sealed package body cannot withstand the heating-caused expansion of the content and is thus broken (retort puncture). In addition, from the viewpoint of storage stability, the airtightness at the sealed portions is a vital element.

As a method for tying both ends of the tubular film, a method in which a metal wire (for example, aluminum) or a synthetic resin tape is used is known. Patent Literature 1 to 3 disclose a method in which both ends of a tubular film are sealed using a tape made of a synthetic resin (for example, vinylidene chloride or a olefin-based resin). More specifically, Patent Literature 1 discloses a method in which a tape is laid on vacant portions formed by pressing the content in a tubular film in a direction that intersects the longitudinal direction of the tubular film, the tape is welded to the tubular film, and the vacant portions are transversely sealed.

Patent Literature 2 discloses a sealing method in which a vacant portion formed by pressing the content in a tubular film is converged in a direction that traverses a flat surface, a tape is laid so as to surround the converged vacant portion, the vacant portion on which the tape is laid is sealed together with the tape in a traverse direction (first sealing), the tape is sealed in a direction that intersects the first sealing (second sealing), and the tape is sealed in a direction that intersects the first sealing on the opposite side of the converged vacant portion to the second sealing (third sealing).

Patent Literature 3 discloses a sealing method in which a vacant portion formed by pressing the content in a tubular film is converged in a direction that traverses a flat surface, two pieces of a tape are laid so as to surround the converged vacant portion, the vacant portion on which the tape is laid is sealed together with two pieces of the tape in a traverse direction (first sealing), two pieces of the tape are sealed in a direction that intersects the first sealing (second sealing), and two pieces of the tape are sealed in a direction that intersects the first sealing on the opposite side of the converged vacant portion to the second sealing (third sealing).

### Citation List

### Patent Literature

[Patent Literature 1] Japanese Unexamined Patent Application Publication No. 2005-231639
[Patent Literature 2] Japanese Unexamined Patent Application Publication No. 2006-069647
[Patent Literature 3] Japanese Unexamined Patent Application Publication No. 2006-069648

### Summary of Invention

### Technical Problem

However, according to the above methods, there are cases in which heat applied to seal and integrate the converged vacant portion and the tape is transferred to the collar of the sealed package body which is located in the vicinity of the converged portion. The applied heat is hot enough to integrate the tape and the resin film. Therefore, there are cases in which the heat transferred to the collar of the sealed package body melts the resin film in the vicinity of the converged portion and disadvantages such as the occurrence of pinhole are caused.

In addition, according to the methods of Patent Literature 2 and 3, it is necessary to carry out sealing plural times on the tape laid on the converged vacant portion. This causes an increase in the number of steps and the complication of the steps, and thus it becomes difficult to increase the production rate of sealed package bodies.

The invention has been made in consideration of the above problems, and an object of the invention is to provide a sealed package body that is sufficiently resistant to heating-induced damage during a production process and has excellent airtightness. In addition, another object of the invention is to provide a production method and a production apparatus with which the sealed package body can be produced at a sufficient efficiency.

### Solution to Problem

A sealed package body according to the invention includes a first sealed portion that configures a tubular film, which is formed by bending a belt-like synthetic resin film in a tube shape so as to make both side edge portions of the film overlapped and fusing an overlapped portion in a longitudinal direction of the film, thereby storing a content, second sealed portions formed at both end portions of the tubular tube and formed by fusing each inside surfaces of the tubular film across an entire length of the tubular film in a width direction, and tying members that are respectively formed at both end portions of the tubular film and tie both end portions that are converged together.

The sealed package body can obtain not only a sealing effect of the tying member but also a sealing effect of the second sealed portions provided across the entire length of the tubular film in the width direction. Therefore, the airtightness of the sealed package body is superior to that in the related art, and risks, such as ventilation between the inside and outside of the sealed package body, the leakage of air from the sealed package body and the intrusion of liquid into the sealed package body can be reduced.

In the invention, an area ratio of the second sealed portion to an entire area of an ear portion from an outside of the tying member to the end portion of the tubular film in the sealed package body preferably exceeds 5%. Thereby, sufficient airtightness can be obtained.

A width of the second sealed portion is preferably 0.1 mm to 6.0 mm from the viewpoint of converging a vicinity of the second sealed portion.

The second sealed portion preferably includes at least one continuous sealed line across an entire length of the tubular film in the width direction from the viewpoint of both efficient fusion and airtightness. In addition, a width of the sealed line is preferably 0.1 mm to 2.0 mm.

In addition, the second sealed portion is preferably formed by fusing each inside surfaces of the tubular film in a net shape from the viewpoint of both efficient fusion and airtightness.

Regarding the configuration of the invention, since it is not necessary to apply heat to the vicinity of a place that serves as a collar of the sealed package body, heat does not frequently affect the place, and, consequently, the occurrence of pinhole is suppressed in the collar of the sealed package body. In addition, since the second sealed portion can be formed by carrying out a heating treatment once, there is only a small influence on the production rate.

In the invention, the second sealed portion is preferably formed using ultrasonic sealing. Sealing using ultrasonic waves allows the pin-point sealing of desired places, and thus only a little amount of heat leaks into the vicinities of treated portions. Therefore, the occurrence of pinhole in the collar of the sealed package body can be further reduced.

In the invention, a synthetic resin wire may be used as the tying member. In this case, the synthetic resin wire can be formed into a ring shape by fusing both end portions. When a tying member made of the synthetic resin wire is employed, it is not necessary to classify the wire by material when the package needs to be disposed of after the opening of the sealed package body and the consumption of the content. In addition, since no metallic member is used, it is possible to carry out metal detection in the product inspection and thus inspect whether or not metallic foreign substances have been incorporated into the sealed package body.

The invention provides a method for producing the sealed package body. That is, the method for producing a sealed package body of the invention includes an overlapped portion-forming step of bending a belt-like synthetic resin film, thereby forming a tubular body in which both side edge portions of the film are overlapped, a first fusion step of fusing an overlapped portion of the tubular body in a longitudinal direction of the film, thereby forming a first sealed portion and obtaining a tubular film compact, a filling step of filling the tubular film compact with the content, a squeezing step of applying a force to the tubular film compact filled with the content from outside and continuously forming a flat portion below which the content is pressed in the tubular film compact at predetermined intervals, a second fusion step of adding heat to the flat portion and fusing each inside surfaces of the tubular film compact across an entire length of the tubular film compact in a width direction, thereby forming a second sealed portion, and a tying step of converging the tubular film compact in the second sealed portion or a vicinity of the second sealed portion, thereby forming a converged portion and tying the converged portion.

According to the method, since both end portions are respectively sealed using the second sealed portions and the tying members, it is possible to efficiently produce a sealed package body having excellent airtightness. In addition, according to the method, since it is not necessary to apply heat to the vicinity of the place that serves as the collar of the sealed package body, heat does not frequently affect the place, and, consequently, the occurrence of pinhole is suppressed in the collar of the sealed package body. In addition, since the second sealed portion can be formed by carrying out a heating treatment once, there is only a small influence on the production rate, and thus sealed package bodies can be produced as efficiently as in production methods of the related art.

The invention provides an apparatus for producing the sealed package body. That is, an apparatus for producing a sealed package body of the invention includes overlapped portion-forming means for bending a belt-like synthetic resin film, thereby forming a tubular body in which both side edge portions of the film are overlapped, first fusion means for fusing an overlapped portion of the tubular body, thereby forming a first sealed portion and obtaining a tubular film compact, filling means for filling the tubular film compact with the content, squeezing means for applying a force to the tubular film compact filled with the content from outside and continuously forming a flat portion below which the content is pressed in the tubular film compact at predetermined intervals, second fusion means for adding heat to the flat portion and fusing each inside surfaces of the tubular film compact across an entire length of the tubular film compact in a width direction, thereby forming a second sealed portion, and tying means for converging the tubular film compact in the second sealed portion or a vicinity of the second sealed portion, thereby forming a converged portion and tying the converged portion.

According to the apparatus, since both end portions are respectively sealed using the second sealed portions and the tying members, it is possible to efficiently produce a sealed package body having excellent airtightness. In addition, according to the method, since it is not necessary to apply heat to the vicinity of the place that serves as the collar of the sealed package body, heat does not frequently affect the place, and, consequently, the occurrence of pinhole is suppressed in the collar of the sealed package body. In addition, since the second sealed portion can be formed by carrying out a heating treatment once, there is only a small influence on the production rate, and thus sealed package bodies can be produced as efficiently as in production methods of the related art.

### Advantageous Effects of Invention

According to the invention, a sealed package body that is sufficiently resistant to heating-induced damage during a production process and has excellent airtightness is provided. In addition, according to the invention, a production method and a production apparatus with which the sealed package body can be produced at a sufficient efficiency are provided.

### Brief Description of Drawings

Fig. 1A is a plan view illustrating an embodiment of a sealed package body of the invention, and Fig. 1B is a cross-sectional view illustrating an example of a tying member.
Fig. 2 is a plan view illustrating an embodiment of an apparatus for producing the sealed package body of the invention.
Fig. 3 is a perspective view illustrating an embodiment of the apparatus for producing the sealed package body of the invention.
Fig. 4 is a perspective view illustrating an example of vertical ultrasonic fusion means in the apparatus for producing the sealed package body of the invention.
Fig. 5A is a top view illustrating an example of an anvil used for ultrasonic fusion, and Fig. 5B is a side view of the anvil.
Fig. 6A is a top view illustrating another example of an anvil used for ultrasonic fusion, and Fig. 6B is a side view of the anvil.
Fig. 7 shows schematic views illustrating an example of horizontal seal-forming means (second fusion means) in an apparatus for producing sealed package bodies of the invention.
Fig. 8 shows pattern diagrams illustrating an example of sealing patterns of the horizontal seal-forming means in the apparatus for producing sealed package bodies of the invention.
Fig. 9 shows pattern diagrams illustrating an example of sealing patterns of the horizontal seal-forming means in the apparatus for producing sealed package bodies of the invention.
Fig. 10 is a cross-sectional view schematically illustrating an appearance of ultrasonic fusion using the apparatus illustrated in Fig. 4.

### Description of Embodiments

Hereinafter, embodiments of the invention will be described in detail with reference to the accompanying drawings. Meanwhile, in all the drawings, the same element will be given the same reference number and will not be described again. In addition, the positional relationship such as top, bottom, right and left will be based on the positional relationship illustrated in the drawings unless particularly otherwise described.

### (Sealed package body)

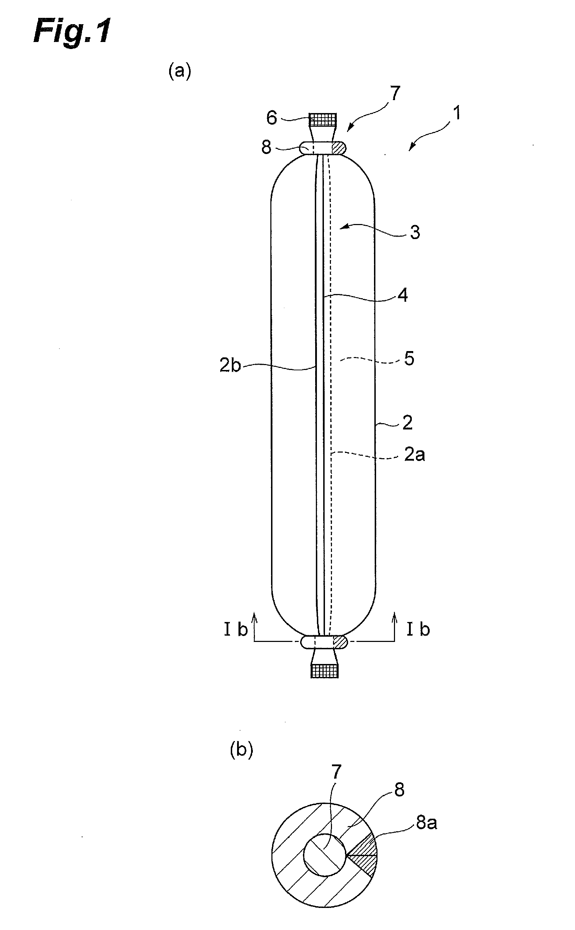

Fig. 1 illustrates an embodiment of a sealed package body according to the invention. Fig. 1B is a cross-sectional view cut along Ib-Ib in Fig. 1A. A sealed package body 1 illustrated in Fig. 1A includes a vertically-sealed portion (first sealed portion) 4 that configures a tubular film 2, which is formed by bending a belt-like synthetic resin film in a tube shape so as to make both side edge portions of the film overlapped and fusing an overlapped portion 3 in a longitudinal direction of the film, horizontally-sealed portions (second sealed portions) 6 formed at both end portions of the tubular film 2, and tying members 8 that are respectively formed at both end portions of the tubular film 2 and tie both end portions that are converged together.

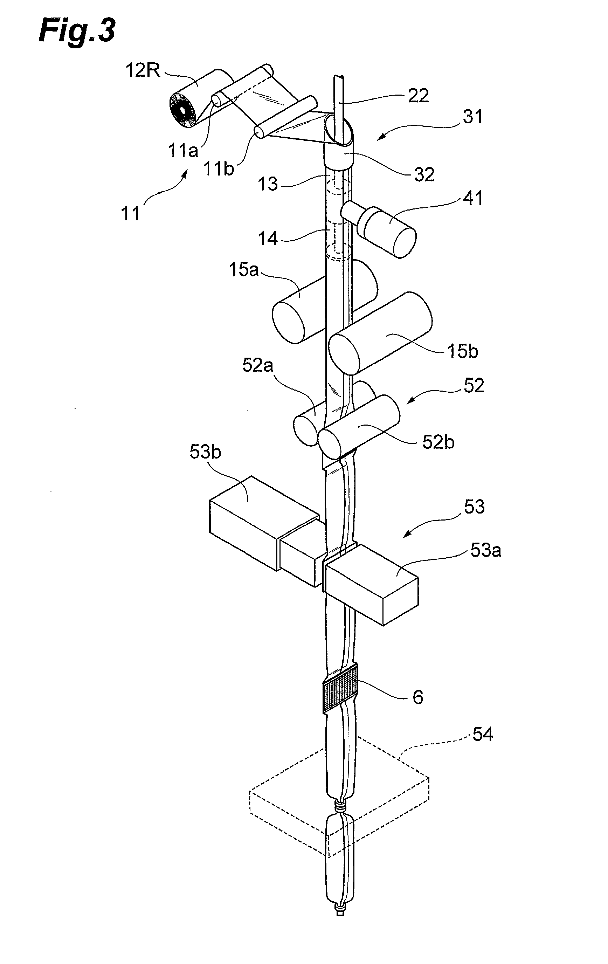

Meanwhile, in the sealed package body 1 of Fig. 1A, both end portions of the tubular film 2 are illustrated to have already been tied using the tying members 8, and the width of the horizontally-sealed portion 6 is illustrated to be smaller than the width of the tubular film 2. However, the horizontally-sealed portion 6 that is not yet provided with the tying member 8 is formed across the entire length of the tubular film 2 in a width direction as illustrated in Fig. 3. The vertically-sealed portion 4 is formed by joining an outside surface and an inside surface of the synthetic resin film through fusion, but the horizontally-sealed portion 6 is formed by joining each inside surfaces of the tubular film 2 through fusion.

The synthetic resin film that forms the tubular film 2 is not particularly limited as long as the synthetic resin film is a thermoplastic resin, and examples thereof include resins made of a vinylidene chloride/vinyl chloride copolymer (VDC/VC), a vinylidene chloride/methyl acrylate copolymer (VDC/MA), high impact polystyrene (HIPS), polyvinylidene chloride (PVDC), polyvinyl chloride (PVC), polyamide (PA), polyethylene (PE), polypropylene (PP), an ethylene vinyl alcohol copolymer (EVOH) or the like. Among the above, the tubular film 2 is preferably made of a polyamide-based resin film from the viewpoint of gas barrier properties and pinhole resistance. Particularly, the tubular film 2 is more preferably made of a film made of a copolymer polyamide-based resin including an aromatic diamine unit from the viewpoint of gas barrier properties. Examples of a copolymerized polyamide-based resin including an aromatic diamine unit include copolymer resins of meta-xylenediamine and adipic acid; copolymer resins of meta-xylenediamine, adipic acid and isophthalic acid; and the like.

The synthetic resin film may be a single-layer film or a multilayer film in which a plurality of films is stacked. Since a variety of functions can be supplied, for example, a multilayer film formed by stacking sealant films on one surface and/or both surfaces of a base film is preferably used. Meanwhile, examples of the multilayer film include films having an adhesion layer, a gas barrier layer or the like interposed between the respective essential layers. This type of multilayer films can be produced using a well-known method, for example, a co-extrusion method in which a resin composition is coextruded and then cooled, thereby forming a laminate in addition to a dry laminate method in which two or more films are adhered or an extruded laminate method in which a resin composition is melted and extruded on the other film, thereby forming a laminate. The multilayer film is preferably a film including at least one layer having gas barrier properties.

In a case in which the sealed package body is used for retort use, the tubular film 2 needs to have a sufficient film strength and sufficient heat resistance to withstand retort sterilization treatments, a multilayer film provided with polyolefin-based resin layers such as polyethylene or polypropylene as a sealant layer on one surface and/or both surfaces of a polyamide-based resin film layer as a base film or a multilayer film provided with sealing layers made of a polypropylene-based resin film on both surfaces of a barrier layer made of a polyamide-based resin film that is included as a base film through a polypropylene-based adhesive resin is preferably used. In the latter multilayer film, the polyamide-based resin that is the barrier layer have oxygen barrier properties and pinhole resistance, and the polypropylene-based resin that is the sealing layer has heat-sealing properties and water vapor barrier properties.

The width (the width from an inside end portion 2a of the tubular film 2 to an outside end portion 2b that forms a flap end portion) of the overlapped portion 3 needs to be approximately 5 mm to 15 mm. When the width of the overlapped portion 3 is less than 5 mm, the vertically-sealed portion 4 needs to be formed in the narrow overlapped portion 3 at a high accuracy. On the other hand, when the width of the overlapped portion 3 exceeds 15 mm, the amount of the synthetic resin film being used tends to increase. Meanwhile, the overlapped portion 3 may be fused across the entire width or at least a part of the width.

The vertically-sealed portion 4 is formed by sealing the overlapped portion 3 in the longitudinal direction using a well-known method. Specific examples of the sealing method include hot air sealing, high frequency sealing, ultrasonic sealing and the like.

Examples of the content 5 include fluid products such as liquid-form products or dough-form product like Japanese pickles, cheese and sausage.

The horizontally-sealed portions 6 are formed at both end portions of the sealed package body in the longitudinal direction, and are sealed across the entire length of the sealed package body in the width direction. The sealing method is not particularly limited as long as the method can ensure the airtightness. Examples thereof include hot air sealing, high frequency sealing, ultrasonic sealing and the like. Ultrasonic sealing is particularly preferable since the applied heat energy is not easily leaked into a collar of the sealed package body or desired places can be highly accurately sealed. Meanwhile, both end portions mentioned herein refer to end portions on both sides of the sealed package body in the longitudinal direction or vicinities thereof, and, in a case in which the vicinities of both end portions of the sealed package body in the longitudinal direction are sealed using the horizontally-sealed portions 6, there are cases in which the ends in the longitudinal direction may not be sealed.

The condition of the horizontally-sealed portion 6 is no ventilation between the inside and outside of the sealed package body throughout the end portion. When ventilation from outside is allowed in any place, it becomes difficult to ensure airtightness. The aspect of the horizontally-sealed portion 6 is preferably set so as to satisfy the condition. For example, a shape in which the entire surface is sealed in the width direction across the entire length or a shape in which the end portion is sealed in a net shape across the entire length in the width direction of the sealed package body can be employed as the shape of the horizontally-sealed portion 6. The net shape mentioned herein refers to a shape in which the gap portions in the net are not fused but a portion corresponding to the net portion is fused. In the net structure, while the total area in which the synthetic resin is actually fused is small, ventilation between adjacent gaps is inhibited by the net portion, and therefore sufficient airtightness can be ensured. This means that it is possible to form sufficiently-airtight horizontal sealing in spite of a small amount of heat energy used for fusion. There is a tendency for the airtightness to improve as the mesh of the net decreases, the size of the net increases, and the width (the length in the longitudinal direction of the sealed package body) of the horizontally-sealed portion increases. In addition, when the horizontally-sealed portion has a net structure, the alternate array of fused portions and non-fused portions facilitates the smooth folding of the horizontally-sealed portion in the width direction when converging the end portion, and therefore the sealed package body becomes more submissive to converging.

Regarding the area of the horizontally-sealed portion, each inside surfaces are preferably fused at a ratio of the fused area in the horizontally-sealed portion 6 to the total area of an ear portion (a portion from the outside of the tying member 8 to the film end portion (whole end portion or tip portion)) of more than 5% from the viewpoint of airtightness. The ratio is more preferably in a range of 10% to 60% from the viewpoint of airtightness and convergence of the film. When the ratio is set to 10% or more, sufficient airtightness can be ensured. In addition, when the ratio is set to be smaller than 60%, the film can be more smoothly converged, and thus can be stably tied using the tying member 8.

The width of the horizontally-sealed portion 6 is preferably 0.1 mm to 6.0 mm, more preferably 0.2 mm to 4.5 mm, and still more preferably 0.3 mm to 3.0 mm. The widening of the horizontally-sealed portion 6 easily improves the airtightness, but is also likely to increase the stiffness of the fused portions, the width of the horizontally-sealed portion has a trade-off relationship with convergence. Therefore, the width of the horizontally-sealed portion 6 needs to be appropriately adjusted depending on the stiffness and the like of films being used.

In addition, the horizontally-sealed portion 6 preferably has at least one continuous sealed line formed across the entire length of the tubular film in the width direction. When the number of the sealed lines that are substantially parallel increases, the airtightness is likely to improve; however, similarly to the horizontally-sealed portion 6, the stiffness of the fused portions is likely to increase. The width of the sealed line in the horizontally-sealed portion 6 is preferably 0.1 mm to 2.0 mm, more preferably 0.15 mm to 1.8 mm, and still more preferably 0.2 mm to 1.6 mm. Meanwhile, the above aspect of the horizontally-sealed portion is no more than a mere example, and different aspects can be appropriately employed within the scope of the purpose of the invention.

The tying members 8 respectively converge both end portions of the tubular film 2 so as to form converged portions 7, and tie the converged portions 7. Both end portions mentioned herein refer to the horizontally-sealed portions 6 or the vicinities thereof, and the vicinity of the horizontally-sealed portion 6 refers to a portion in a range of approximately 10 mm or less from the end portion of the horizontally-sealed portion 6.

In the present embodiment, the tying member 8 is formed of a synthetic resin wire. The synthetic resin wire winds the converged portion 7, and is fused at a fused portion 8a (refer to Fig. 1B). As the material of the synthetic resin wire, PP, polyethylene terephthalate (PET), polyamide (PA), polystyrene (PS), polyethylene (PE), high density polyethylene (HDPE), a vinylidene chloride/vinyl chloride (VDC/VC) copolymer, a vinylidene chloride/methyl methacrylate (VDC/MA) copolymer, high impact polystyrene (HIPS) or the like can be used.

The fused portion 8a in the synthetic resin wire is preferably formed through ultrasonic fusion. Ultrasonic fusion enables a pin-point fusion treatment at a desired place, and therefore the synthetic resin film is not easily damaged. In addition, when a heat-shrinkable synthetic resin wire is employed, heat shrinkage occurs during fusion or a heating treatment such as the retort processing of the package body, and the converged portion 7 can be more tightly constricted, thereby improving the airtightness. The heat shrinkage rate is preferably 5% to 20%. Meanwhile, when the tying members 8 are mounted, since the synthetic resin wires are fused separately from the synthetic resin film, the synthetic resin wires can be tied with no problem regardless of the melting point or softening point of the synthetic resin wire which might be lower or higher than those of the synthetic resin film. From the viewpoint of the heating treatment such as retort, the melting point or softening point of the synthetic resin wire is preferably the same as or higher than the melting point or softening point of the synthetic resin film since the heat resistance of tied portions improves.

As the tying member, a metal wire such as aluminum can be applied in addition to the synthetic resin wire. However, the synthetic resin wire is particularly preferable since it is not necessary to classify the wire by material for disposal or it is possible to carry out metal detection in the product inspection.

The synthetic resin wire or the metal wire preferably has a diameter of 1 mm to 5 mm and a length of 6 mm to 24 mm. The synthetic wire or the metal wire may be a hollow wire or a solid wire. Meanwhile, the synthetic wire or the metal wire preferably has a sufficient stiffness as a wire, and the stiffness can be appropriately selected depending on the diameter or length of the wire and the outer circumferential length of the sealed package body.

(Apparatus for producing the sealed package body)

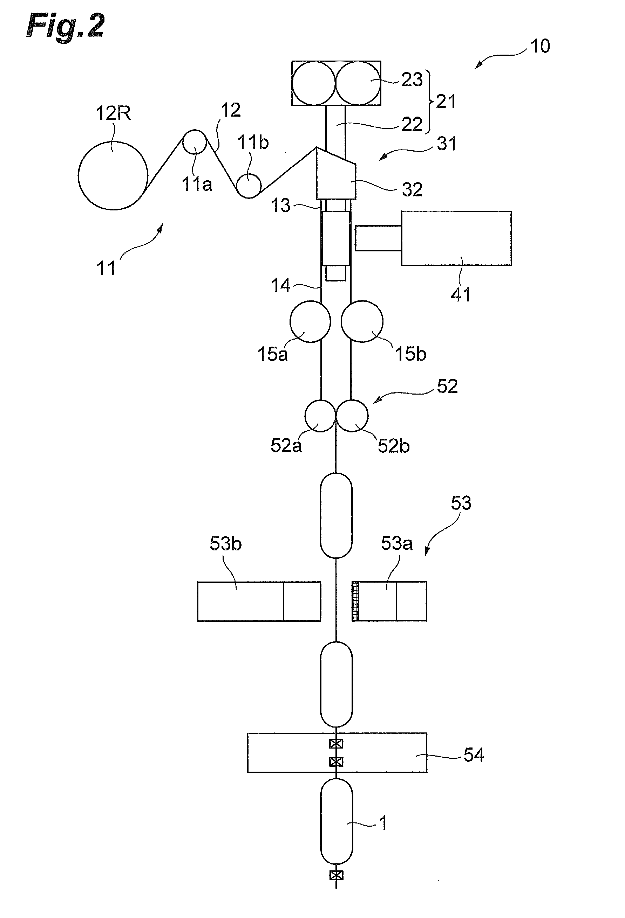

Figs. 2 and 3 are views schematically illustrating an apparatus for producing the sealed package body 1. An apparatus for producing the sealed package body 10 (hereinafter, referred to simply as "apparatus 10") illustrated in the drawings include film supply means 11, overlapped portion-forming means 31, filling means 21, vertical sealing-forming means (first fusion means) 41, horizontal sealing-forming means (second fusion means) 53 and tying means 54.

The film supply means 11 includes a roll 12R for a belt-like synthetic resin film 12 and a plurality of rollers 11a and 11b, and is disposed apart from the overlapped portion-forming means 31. The film supply means 11 continuously supplies the synthetic resin film 12 to the overlapped portion-forming means 31 through the rollers 11a and 11b.

The overlapped portion-forming means 31 receives the synthetic resin film 12 supplied from the film supply means 11. The overlapped portion-forming means 31 includes a tube-producing folder 32 formed by winding a metal specimen with a predetermined shape in a substantially spiral shape. The tube-producing folder 32 bends the supplied synthetic resin film 12, and forms a tubular body 13.

The vertical sealing-forming means 41 that seals an overlapped portion formed using the tube-producing folder 32 and forms a tubular film compact 14 is disposed below the tube-producing folder 32. The vertical sealing-forming means 41 is not particularly limited, and examples thereof include hot air sealing, high frequency sealing and ultrasonic sealing. One example of the hot air sealing is the following configuration. That is, the configuration is that hot air is blown to an overlapped portion using a hot air application nozzle that blows hot air to the overlapped portion from the outer circumferential surface side of the tubular body 13 and an inside heater that heats the overlapped portion from the inner circumferential surface side of the tubular body 13, thereby thermally fusing the overlapped portion and forming a linearly sealed portion (sealed line). In addition, an example of the high frequency sealing is a configuration in which an overlapped portion is inserted between high frequency electrodes, a high frequency electric field is added so as to rotate and oscillate molecules, and heat is generated using the friction heating between the molecules, thereby fusing the overlapped portion.

In the embodiment, the employment of ultrasonic sealing as the vertical sealing-forming means is a particularly preferable method from the viewpoint of airtightness and the property of the tubular package body being easily openable. Fusion using ultrasonic sealing is a method in which an overlapped portion of a synthetic resin film is inserted between an ultrasonic horn and an anvil, and ultrasonic oscillations are supplied so as to oscillate the molecules of the synthetic resin film, thereby generating heat through friction heating between the molecules and fusing the overlapped portion. The "ultrasonic horn" mentioned herein refers to a clasp on the oscillation side, and the "anvil" refers to a bracket for the ultrasonic horn. In the ultrasonic fusion, the heating energy is proportional to the amplitude of ultrasonic waves, a pressing force between the ultrasonic horn and the anvil, and the treatment time. Since the above conditions can be relatively easily and accurately controlled, the sealing strength for developing a favorable property of being easily openable becomes easily controllable. Therefore, the sealed package body of the embodiment in which the overlapped portion is fused using ultrasonic fusion has sufficient airtightness and an excellent property of being easily openable.

Meanwhile, the "excellent property of being easily openable" mentioned herein specifically refers to a 180-degree peel strength of the fused portion being 2 N/15 mm-width to 12 N/15 mm-width when measured using the following method, and the 180-degree peel strength is more preferably 3 N/15 mm-width to 8 N/15 mm-width. When the 180-degree peel strength is less than 2 N/15 mm-width, the sealed package body is likely to be broken (punctured) due to insufficient fusion when heated through, for example, retort processing or the like. On the other hand, when the 180-degree peel strength exceeds 12 N/15 mm-width, the sealing strength is too high, and the property of being easily openable is likely to become insufficient. Additionally, the synthetic resin film is excessively fused and the thickness of the synthetic resin film becomes thin in the sealed portion, which makes the synthetic resin film likely to be broken in the sealed portion.

The method for measuring the 180-degree peel strength is the following method based on ASTM F-88 FIG. 1 LAP SEAL. That is, a stripe-shaped test specimen (a test specimen having a fusion line orthogonal to the longitudinal direction of the stripe shape in the substantially central portion of the stripe in the longitudinal direction) with a width of 15 mm and a length of 50 mm, which has a fused portion in the substantially central portion in the longitudinal direction is cut from the sealed package body. The 180-degree peel strength of the test specimen is measured using a TENSILON universal tester (product name: RTC-1210, manufactured by Orientec Co., Ltd.). At this time, the test specimen is held using both top and bottom film chucks so as to be tugged in the top and bottom direction of the fused portion as a base point. The distance between the film chucks is set to 10 mm in the initial phase of the measurement, the 180-degree peel strength of the fused portion is measured (measured once for each specimen) under a condition of a tensile speed of 300 mm/min, and the average value of the 180-degree peel strengths of ten test specimens is computed.

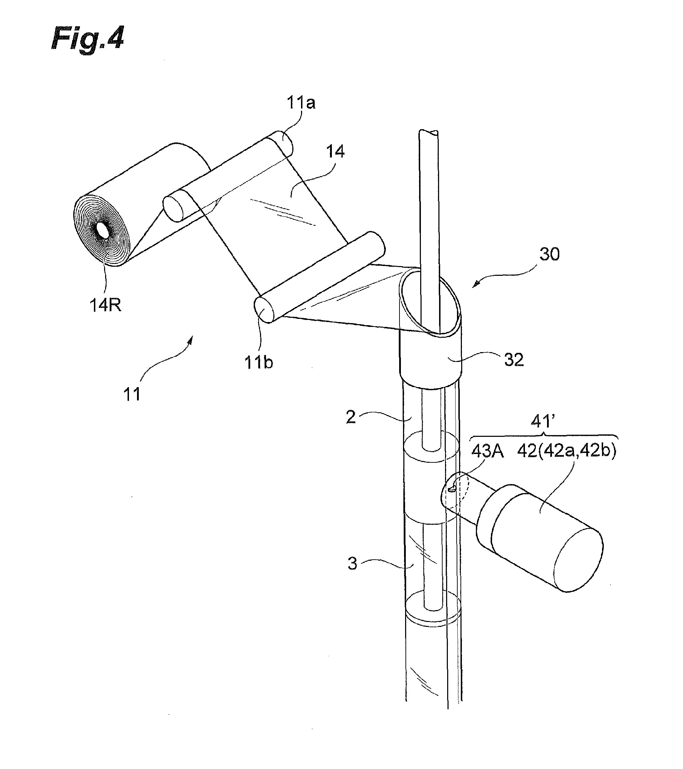

Fig. 4 is a schematic view of an apparatus as vertical ultrasonic fusion means 41' that is the vertical sealing-forming means using ultrasonic sealing. The vertical ultrasonic fusion means 41' as the vertical sealing-forming means is disposed below the tube-producing folder 32. The vertical ultrasonic fusion means 41' ultrasonic-fuses an overlapped portion formed using the tube-producing folder 32 and forms a tubular film compact 3. The vertical ultrasonic fusion means 41' includes an anvil 43A and an ultrasonic horn 42a disposed so as to respectively come into contact with the inside and outside of the overlapped portion of the synthetic resin film 14. Meanwhile, the ultrasonic horn 42a configures ultrasonic oscillating means 42 together with a booster 42b that converts the amplitude of the oscillation energy supplied from an ultrasonic oscillator (not illustrated). The ultrasonic oscillator is attached to the base end side of the booster 42b, and supplies ultrasonic oscillation to the ultrasonic horn 42a through the booster 42b. The number of oscillations and amplitude of the ultrasonic oscillator are controlled using a control apparatus not illustrated.

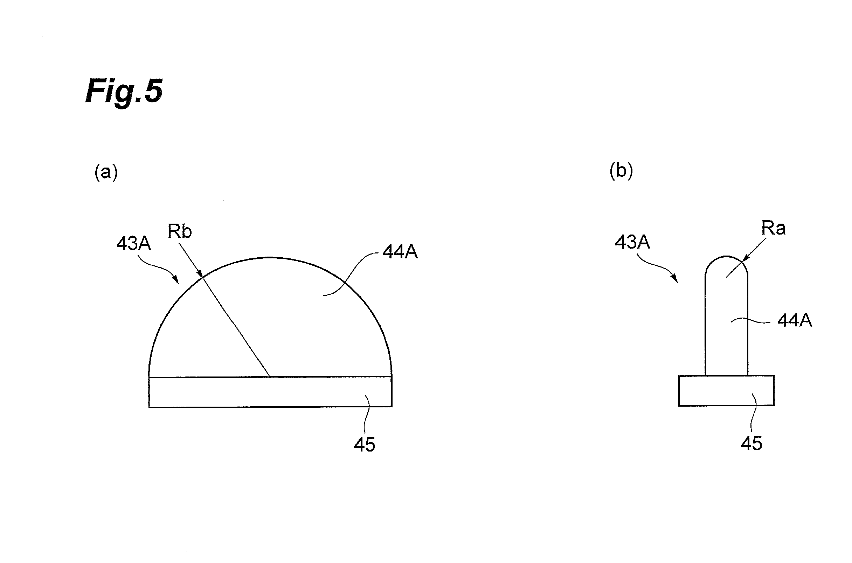

The anvil 43A illustrated in Fig. 5 is made up of a base 45 and a contact portion 44A formed on the base 45. The material of the anvil 43A is not particularly limited as long as the material is an ordinarily-used metal. A material having durability against abrasion, wear and the like, such as SUS304, is preferable.

The contact portion 44A has a curved surface with a curvature radius Rb with respect to the width direction at the front end portion as illustrated in Fig. 5A, and the overlapped portion of the synthetic resin film is brought into contact with the curved surface. When the anvil has the above shape, the contact with the overlapped portion is stabilized. Meanwhile, Rb is preferably 3 mm to 10 mm. When Rb is less than 3 mm, since the fusion line becomes too narrow, the influence of disturbance becomes large, and the stability of fusion is likely to become insufficient. In addition, the sealed package body is likely to be broken during the retort processing. On the other hand, when Rb exceeds 10 mm, since the contact area becomes large, the pressing force increases, and therefore the film is likely to be cut.

In addition, when the contact portion 44A is viewed from the thickness direction, the contact portion has a thickness shape (the curvature radius in the thickness direction) of Ra and has a curved shape at the front end as illustrated in Fig. 5B. When the contact portion has the above shape, the contact with the overlapped portion is stabilized. Meanwhile, the curvature radius Ra in the thickness direction is preferably 0.5 mm to 5 mm. When the curvature radius Ra in the thickness direction is less than 0.5 mm, the contact area decreases so that the overlapped portion can be fused even with a small amount of energy, but the curvature increases such that the film is likely to be cut. On the other hand, when the curvature radius Ra in the thickness direction exceeds 5 mm, the contact area increases, the necessary amount of energy supplied for fusion is likely to increase, and the process rate is likely to become insufficient.

When ultrasonic fusion is carried out using the anvil illustrated in Fig. 5, one linear fusion line is obtained. Meanwhile, the anvil may have at least one recess portion (groove) extending in the same direction as the longitudinal direction of the overlapped portion on a surface that comes into contact with the overlapped portion of the synthetic resin film. When the anvil has the recess portion, it is possible to provide a plurality of contact places with the ultrasonic horn, and a plurality of linear fusion lines parallel to each other is formed. When a plurality of fusion lines is formed, superior airtightness can be achieved while maintaining the property of the sealed package body of being easily openable.

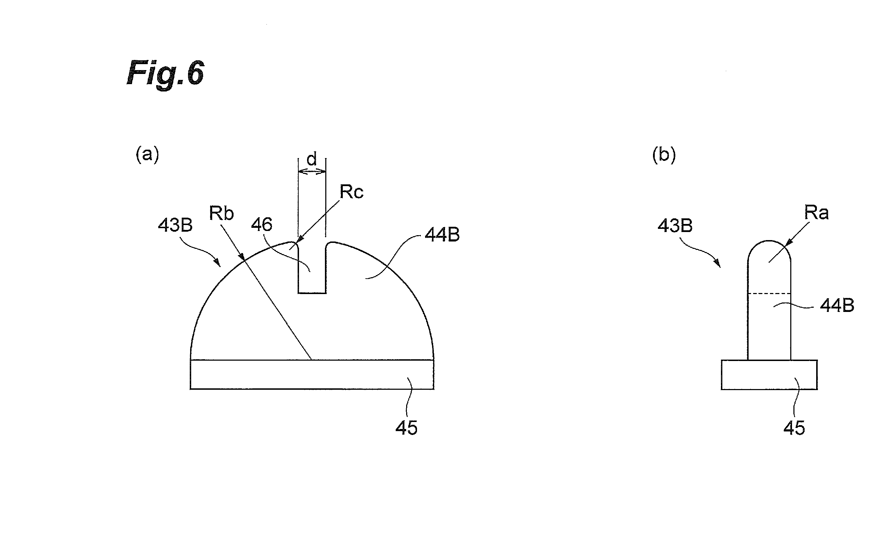

An anvil 43B illustrated in Fig. 6 is made up of the base 45 and a contact portion 44B formed on the base 45, and has a recess portion 46 in the top portion of the contact portion 44B. The contact portion 44B has a curved surface with a curvature radius Rb with respect to the width direction in the upper portion and the recess portion 46 with a width d in the top portion as illustrated in Fig. 6A. The contact portion between the side surface of the recess portion 46 and the curve surface in the upper portion forms a curved surface with a curvature radius Rc. The width d of the recess portion 46 is preferably 0.1 mm to 0.5 mm. When the width is less than 0.1 mm, it becomes difficult for two fusion lines to be concurrently formed, and, on the other hand, when the width exceeds 0.5 mm, the distance between the fusion lines increases, and therefore the width of the sealed portion increases, and the area of wasted portions increases. The curvature radius Rc is preferably 0.1 mm to 0.5 mm. When the curvature radius Rc is less than 0.1 mm, too much stress is concentrated such that the film is likely to be cut, and, on the other hand, when the curvature radius exceeds 0.5 mm, since the contact area increases, the pressing force increases and thus a disadvantage such as an increased possibility of the cutting of the film is likely to be caused.

In a case in which ultraviolet fusion is carried out using the anvil 43B illustrated in Fig. 6, the contact portion of the anvil 43B comes into contact with the ultrasonic horn through the synthetic resin film at two linear places. As a result, the sealed portion formed through ultrasonic fusion is made up of two linear fused portions.

The shape of the ultrasonic horn 42a is not particularly limited as long as the shape can supply ultrasonic oscillation to the synthetic resin film when the synthetic resin film is brought into contact with the anvil 43A or the anvil 43B through the synthetic resin film 14. For example, a metal compact may have a substantially columnar shape in which the contact surface is planar.

In addition, horn-cooling means 47 that cools the ultrasonic horn 42a may be provided in the vicinity of the ultrasonic horn 42a. The horn-cooling means 47 is not particularly limited, and examples thereof include a method in which a fan is provided on the outside of the ultrasonic horn 42a and the ultrasonic horn is cooled using air sent from the fan. When ultrasonic fusion is continuously carried out, the ultrasonic horn 42a remains heated, and there are cases in which the output of ultrasonic waves becomes unstable or the ultrasonic oscillator is broken. When ultrasonic fusion is carried out while cooling the ultrasonic horn, it is possible to carry out ultrasonic fusion in a more stabilized manner.

In the embodiment, the vertical ultrasonic fusion means provided with a set of the anvil 43A and the ultrasonic horn 42a is illustrated, the vertical ultrasonic fusion means may have two or more sets. At this time, a plurality of the sets may be disposed with the anvils in the same orientation so that places in which the respective anvils come into contact with the synthetic resin film are located on the same route, or a plurality of the sets may be disposed with the respective anvils in different orientations so that the places are located on different routes. In a case in which a plurality of the sets is disposed with the anvils in the same orientation, only one fusion line is formed. At this time, since the same place is ultrasonic-fused twice, the sealing strength improves, and the stability of the sealing strength with respect to the longitudinal direction further improves. On the other hand, when a plurality of the sets is disposed with the anvils in different orientation, a plurality of fusion lines is formed. Therefore, an effect that an increase in the number of fusion lines improves the airtightness can be obtained.

In addition, since ultrasonic fusion can fuse desired places in a pin-point manner and can only treat targeted extremely narrow portions as well, there is no case in which the vicinity of the sealed portion is excessively shrunk even in highly heat-shrinkable films, and the fused portion (sealing line) can be narrowed. Therefore, it is easy to converge and tie (seal) the sealed package body at both end portions, and the ventilation risk in sealed portions can be reduced.

The vertically-sealed portion 4 (first sealed portion) of the sealed package body is preferably made up of at least one (one or plural) linear fused portion extending in the longitudinal direction of the tubular film since favorable airtightness and the excellent property of being easily openable can be further improved.

The filling means 21 includes a hollow cylindrical filling nozzle 22 having an outer diameter that is smaller than the inner diameter of the tube-producing folder 32. The filling nozzle 22 penetrates the tube-producing folder 32, extends to the downstream side of the vertical sealing-forming means 41, and is disposed so that the center of the filling nozzle 22 and the center of the tube-producing folder 32 are in substantially the same line. Since the opening portion of the filling nozzle 22 is located on the downstream side of the vertical sealing-forming means 41, it is possible to fill the tubular film compact 14 formed using the vertical sealing-forming means 41 with a content. A feed pump 23 that supplies the content to the filling nozzle 22 is connected to the top end of the filling nozzle. The filling means 21 supplies the content to the filling nozzle 22 according to the driving of the feed pump 23. Examples of the content applied herein include liquid-form or dough-form food or products like fish meat, animal meat, liquid eggs, jelly, arum roots and Japanese pickles, but the content is not limited thereto.

Sending rollers 15a and 15b that send the tubular film compact 14 filled with the content downward are disposed on the downstream side of the opening portion of the filling nozzle 22. The sending rollers 15a and 15b are rotated using a driving mechanism, not illustrated, and are disposed so as to pinch the tubular film compact 14 from both sides.

Squeezing means 52 is disposed on the downstream side of the sending rollers 15a and 15b. The squeezing means 52 includes squeezing rollers 52a and 52b that press the tubular film compact 14 filled with the content from outside at predetermined intervals and form flat surfaces below which the content is pressed. The squeezing rollers 52a and 52b are rollers having a width that is longer than the width of the flattened tubular film compact 14, and are supported by roller-supporting members, not illustrated, so as to allow an operation that presses the tubular film compact 14 at predetermined intervals.

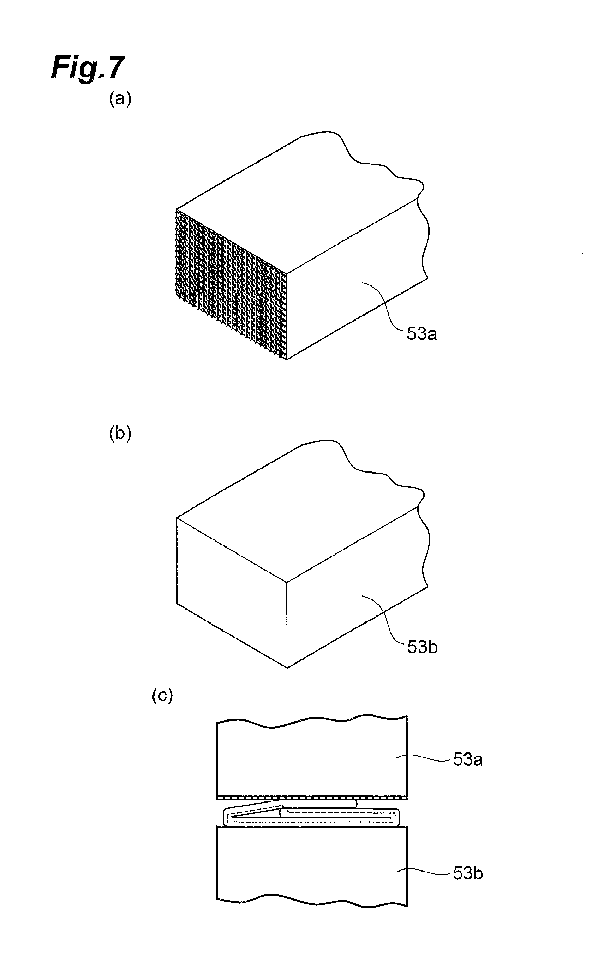

Horizontal sealing-forming means 53 is disposed below the squeezing means 52. The horizontal sealing-forming means 53 includes an anvil 53a and an ultrasonic horn 53b as illustrated in Figs. 2 and 3. A booster and an ultrasonic oscillator, both of which are not illustrated, are provided in this order on the base end side of the ultrasonic horn 53b, and the ultrasonic oscillator is controlled using control means, not illustrated. Fig. 7A illustrates the shape of the contact surface of the anvil 53a with a treatment workpiece, and Fig. 7B illustrates the shape of the contact surface of the ultrasonic horn 53b with a treatment workpiece. A plurality of protrusions is provided on the contact surface of the anvil 53a so as to intersect each other in a net shape. The contact surface of the ultrasonic horn 53b is a plane. When horizontal sealing is carried out using the ultrasonic horn and the anvil, a net-like horizontally-sealed portion is formed. Meanwhile, an another aspect of the embodiment, a plurality of protrusions is provided on the contact surface of the ultrasonic horn 53b so as to intersect each other in a net shape, and the contact surface of the anvil 53a is a plane.

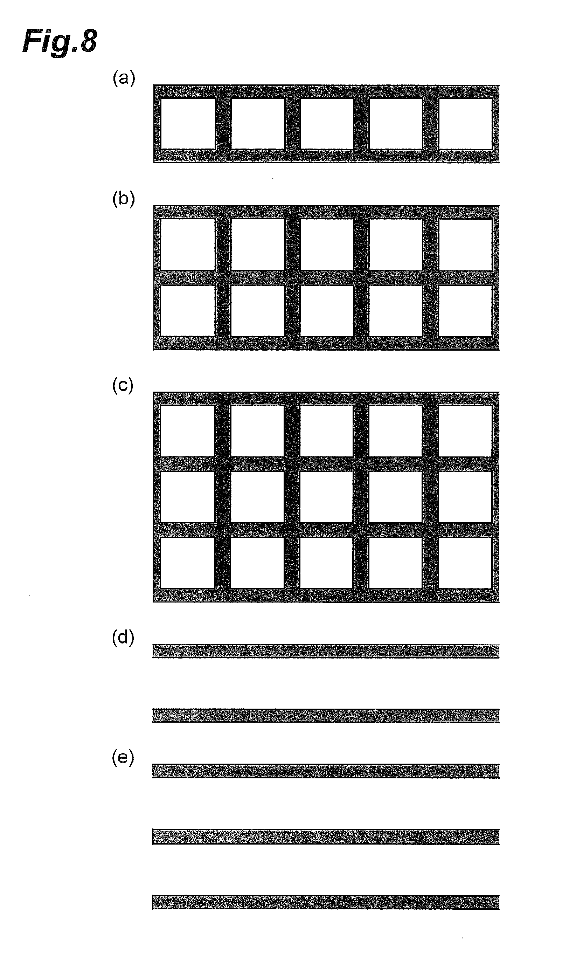

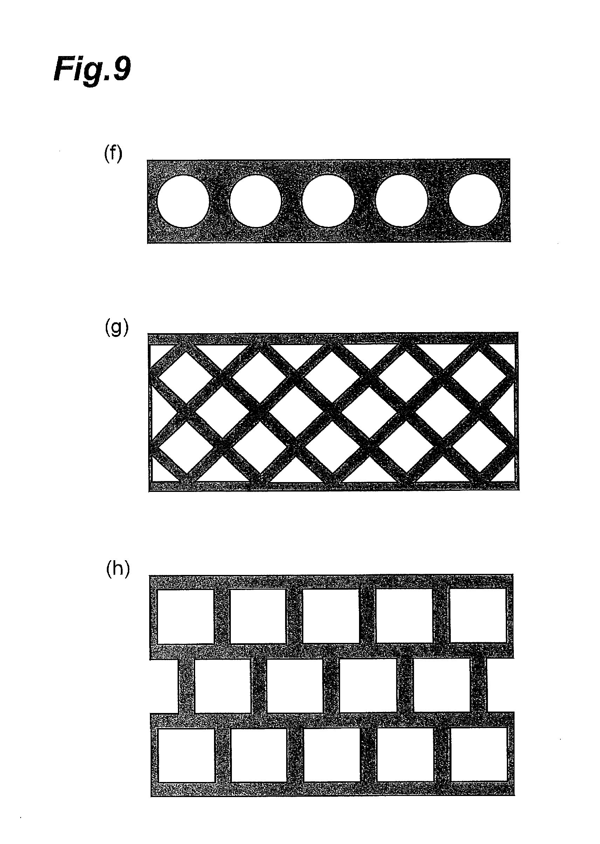

Figs. 8 and 9 exemplify horizontal sealing patterns in the embodiment. Fig. 8A illustrates a shape of two lines with rectangular holes therebetween, Fig. 8B illustrates a shape of three lines with rectangular holes therebetween, and Fig. 8C is a shape of four lines with rectangular holes therebetween. In addition, Fig. 8D illustrates a shape of two lines, and Fig. 8E illustrates a shape of three lines. Fig. 9A illustrates a shape of a line with round holes therein, Fig. 9B illustrates a shape of two lines with rhombic holes therebetween, and Fig. 9C illustrates a shape of four lines with rectangular holes therebetween, in which the holes in the middle layer are located in deviated positions. The horizontal sealing patterns are preferable shapes since sufficient airtightness is obtained and the total amount of energy used for fusion is small. In addition, the alternate array of fused portions and non-fused portions allows the horizontally-sealed portions to be smoothly folded in the width direction when converging the sealed package body and provides a superior submissiveness to converging.

Meanwhile, the shape of the horizontal sealing is not limited to the examples of Fig. 8 or 9 and a net shape, and the entire surface of the tubular film compact 14 may be sealed across the entire length in the width direction. In addition, in a case in which the tubular film compact 14 is sealed in a linear shape formed across the entire length in the width direction, the airtightness can be improved by increasing the number of the lines. In addition, while the use of ultrasonic sealing as the horizontal sealing-forming means 53 is exemplified in the embodiment, the horizontal sealing-forming means is not limited thereto, and a variety of methods used for the sealing of synthetic resin films such as hot air sealing or high frequency sealing can be appropriately employed.

The tying means 54 is provided below the horizontal sealing-forming means 53. The tying means 54 converges the flat portion of the tubular film so as to form the converged portion 7, and ties the converged portion 7 using the tying member 8.

The tying means 54 forms the converged portion 7 before the tying of the converged portion using the tying member 8. The converging method using the tying means 54 is not particularly limited, and examples thereof include a method in which two converging plates having a V-shaped groove are disposed so that the V-shaped grooves face each other, the plates are made to reciprocate along the flat surface of the tubular film compact 14 formed using the squeezing rollers, and a converged portion is formed when the converging plates approach each other.

Regarding the place in the flat portion being converged, in the embodiment, the flat portion is converged when producing the sealed package body 1 so that the converged portion 7 is located inside the end portion of the horizontally-sealed portion 6. However, the place is not limited thereto, and the horizontally-sealed portion 6 may be converged. However, from the viewpoint of the appearance of the finally-produced sealed package body 1, it is preferable to converge the place so that the converged portion 7 is located inside the end portion of the horizontally-sealed portion 6 in the sealed package body.

The tying means 54 disposes the tying member 8 in the converged portion 7. As the tying method using the tying means 54, it is possible to employ a method in which a synthetic resin wire is wound around the converged portion 7 and the end portions of the synthetic resin wire are fused or a method in which a metal wire such as aluminum is wound and pressed. However, a method in which a synthetic resin wire is used is preferable since it is not necessary to classify the material for disposal or it is possible to carry out metal detection in the product inspection.

When a fused portion is formed in the synthetic resin wire, heat fusion or the like can be employed as well as ultrasonic fusion. However, ultrasonic fusion is preferable since a fusion treatment can be carried out on a desired place in a pin-point manner, and the synthetic resin film is not easily damaged.

Cutting means, not illustrated, is provided on the downstream side of the tying means 54, and cuts the tubular film compact 14 which is filled with the content and has a sealed portion formed therein, thereby manufacturing an individual sealed package body.

### (Method for producing the sealed package body)

The method for producing the sealed package body 1 using the apparatus 10 will be described in detail. First, the synthetic resin film 12 is continuously supplied to the overlapped portion-forming means 31 from the film supply means 11 through the rollers 11a and 11b. The supply rate of the synthetic resin film 12 is, in general, approximately 10 m/min to 60 m/min, and is appropriately set depending on the kind, thickness and stiffness of the synthetic resin film 12 being used, the material or viscosity of the content being loaded, or the like.

The synthetic resin film 12 supplied from the film supply means 11 is guided from the top surface opening of the tube-producing folder 32 to the bottom surface opening. When passing the tube-producing folder 32, the synthetic resin film 12 curves in a tube shape according to the spiral structure of the tube-producing folder, and turns into a tubular body 13 having an overlapped portion in which both edges of the synthetic resin film are overlapped (overlapped portion-forming step). The tubular body 13 is sent downward from the bottom surface opening of the tube-producing folder 32.

Next, the overlapped portion is sealed using the vertical sealing-forming means 41, thereby forming a tubular film compact 14 (first fusion step). After that, a content is introduced into the tubular film compact 14 from the filling nozzle 22 (filling step).

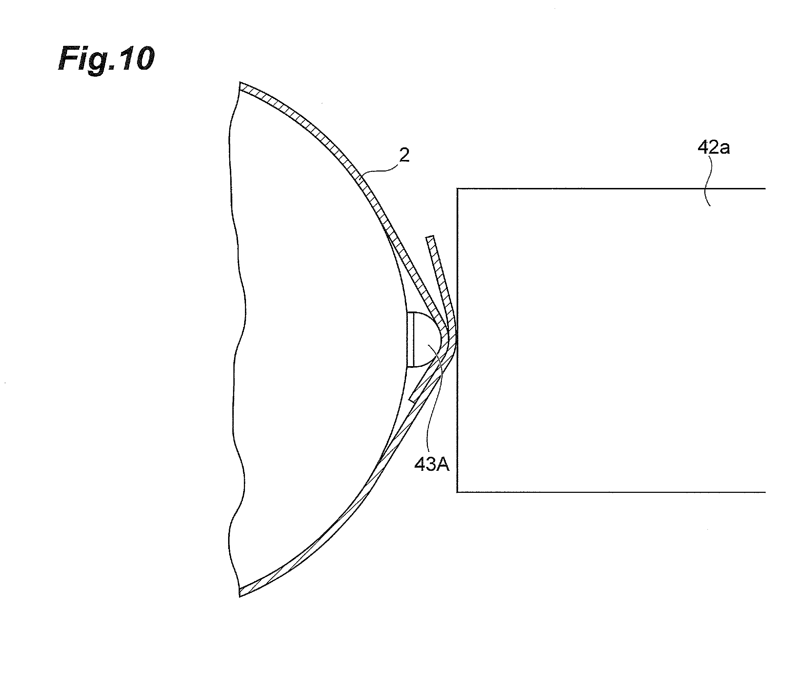

In addition, in the first fusion step, the use of the vertical ultrasonic fusion means 41' illustrated in Fig. 4 is particularly preferable in terms of the control of the sealing strength. In the embodiment, the anvil 43A is brought into contact with the overlapped portion from the inner circumferential surface side of the overlapped portion, and, on the other hand, the ultrasonic horn 42a is brought into contact with the overlapped portion from the outer circumferential surface side of the overlapped portion as illustrated in Fig. 10. When ultrasonic oscillation is supplied to the overlapped portion from the ultrasonic horn 42a in this state, friction heat is generated in the place between the anvil 43A and the ultrasonic horn 42a due to oscillation energy, the resin is locally fused, and the overlapped synthetic resin film is fused. Since the synthetic resin film 14 is continuously supplied to the tube-producing folder 32, the fused place continuously spreads toward the top side of the synthetic resin film. As a result, one linear fused portion is formed in the overlapped portion in the longitudinal direction.

Since the heating energy in ultrasonic fusion is proportional to the amplitude of ultrasonic waves, the pressing force between the ultrasonic horn 42a and the anvil 43A, and the treatment time, the sealing strength can be easily controlled in a flowing direction by continuously controlling the above elements, and a tubular film compact 3 having airtightness and an excellent property of being easily openable can be easily formed.

As the amplitude of the ultrasonic waves increases in ultrasonic fusion, the heating energy increases and the overlapped portion is more easily fused. The amplitude of the ultrasonic waves is preferably 15 µm to 60 µm. When the amplitude is less than 15 µm, the heating energy is too small so as to cause insufficient fusion, and thus, after being packaged, the package is likely to be broken (punctured) during, for example, retort processing. On the other hand, when the amplitude exceeds 60 um, the heating energy is too large, and thus the property of being easily openable is likely to be insufficient. In addition, the synthetic resin film is excessively melted, and thus the thickness of the synthetic resin film in the sealed portion becomes thin such that the synthetic resin film is likely to be broken in the sealed portion.

As the pressing force between the ultrasonic horn 42a and the anvil 43A increases, the heating energy increases, and the overlapped portion is more easily fused. The pressing force between both components is preferably 5 N to 70 N. When the pressing force is less than 5 N, the heating energy is too small so as to cause insufficient fusion, and thus, after being packaged, the package is likely to be broken (punctured) during, for example, retort processing. On the other hand, when the pressing force exceeds 70 N, the heating energy is too large, and thus the property of being easily openable is likely to be insufficient. In addition, the synthetic resin film is excessively melted, and thus the thickness of the synthetic resin film in the sealed portion becomes thin such that the synthetic resin film is likely to be broken in the sealed portion.

Meanwhile, the above ultrasonic wave conditions need to be appropriately adjusted using the thickness and material (amorphous/crystalline and thermal characteristics such as melting point) of the film or the package-manufacturing speed so as to obtain an appropriate sealing strength. When the ultrasonic output is controlled to be constant by continuously controlling the ultrasonic contact pressure and the amplitude, it becomes easy to control the strength of the sealed portion to be constant.

After the content is loaded, the content is pressed from outside using the squeezing rollers 52a and 52b at predetermined intervals, and the place below which the content has been pressed is formed to be flat (squeezing step). After that, a part of the flat portion is inserted between the ultrasonic horn 53b and the anvil 53a, supplied with ultrasonic oscillation while being pressed at a constant pressure, and the pressed place is sealed, thereby forming a horizontally-sealed portion 6 (second fusion step). Meanwhile, in the formation of the horizontally-sealed portion, the overlapped portion preferably faces the anvil 53a as illustrated in Fig. 7C. Thereby, the airtightness of the horizontally-sealed portion further improves.

The conditions such as the amplitude and frequency of the ultrasonic oscillation, the pressing force between the ultrasonic horn and the anvil, and the treatment time needs to be appropriately adjusted using the thickness and material (amorphous/crystalline and thermal characteristics such as melting point) of the synthetic resin film being treated, the width of the tubular film compact 14, the package-manufacturing speed and the like so as to obtain an appropriate sealing strength.

In the embodiment, the contact surface of the anvil 53a may be provided with a plurality of protrusions intersecting each other in a net shape as illustrated in Fig. 7A. Thereby, in the horizontally-sealed portion 6 being formed, the gap portions in the net are not fused, and a portion corresponding to the net portion is fused. Meanwhile, the shape of the contact surface of the anvil 53a is not particularly limited, and may be, for example, the shapes exemplified in Figs. 8 and 9 as described above.

After the horizontally-sealed portion 6 is formed, the flat portion of the tubular film is converged using the tying means 54 so as to form a converged portion 7, and the tying member 8 is provided at the converged portion (tying step). After that, the film between sealed package bodies that are continuously manufactured and thus connected to each other is cut, thereby obtaining individual sealed package bodies 1.

According to the embodiment, since both end portions are respectively sealed using the horizontally-sealed portions 6 and the tying members 8, the sealed package bodies 1 having excellent airtightness can be obtained. In addition, according to the apparatus 10 of the embodiment, heating in the production process causes only a small amount of damage, and the occurrence of defect such as pinholes in the shoulder portion of the sealed package body 1 can be sufficiently suppressed.

### [Examples]

Hereinafter, the invention will be described in detail using examples and comparative examples, but the invention is not limited thereto.

### (Example 1)

A sealed package body was manufactured using an apparatus having the same configuration as that of the apparatus 10 illustrated in Figs. 2 and 3 and the following method.

A 45 µm-thick multilayer film obtained by stacking polypropylene on both surfaces of an MXD nylon-based resin film through adhesive polypropylene was used as the synthetic resin film. The multilayer film was sent to the overlapped portion-forming means and bent in a tube shape, thereby forming an overlapped portion in which both edges were overlapped. Then, the overlapped portion was sealed using hot air, thereby forming a tubular film compact. The hot air sealing was carried out by providing an inside heater on the inner circumferential surface side of the tubular body, and blowing hot air from the outer circumferential surface side. The temperature of the inside heater was set to 120°C, and the temperature of the hot air was set to 250°C.

Next, the tubular film compact was filled with a content (minced fish meat) using the filling means, and then a flat surface below which the content was pressed using the squeezing rollers was formed.

After the formation of the flat surface, the flat surface was ultrasonic-sealed, thereby forming a horizontally-sealed portion. The conditions of the ultrasonic sealing were an ultrasonic amplitude of 55 µm, a frequency of 40 kHz, a pressing force between the ultrasonic horn and the anvil of 700 N, and an output of 300 W. An anvil having a net shape formed on the contact surface as illustrated in Fig. 7A was used as the anvil.

Next, the flat surface was converged, thereby forming a converged portion. The converged portion was provided in a place that would be located on the inside of the horizontally-sealed portion when a sealed package body was finally manufactured. Next, the converged portion was inserted, pressed and tied using a round aluminum wire having a diameter of 2.5 mm and a length of 20 mm. After the tying, the film between sealed package bodies that were continuously manufactured and thus connected to each other was cut, thereby manufacturing individual sealed package bodies.

### (Example 2)

A sealed package body was manufactured in the same manner as in Example 1 except that the converged portion was tied using a polypropylene wire instead of the aluminum wire. In the present example, (solid) polypropylene wires having a diameter of 2.5 mm, a length of 20 mm and a round cross-sectional shape was used as the tying members disposed at both end portions of the sealed package body. The melting point of the synthetic resin wire was 135°C, and the heat shrinkage rate was 10%. After the synthetic resin wire was disposed so as to wind the converged portion, the end portions of the synthetic resin wire were fused using ultrasonic waves.

### (Example 3)

A sealed package body was manufactured in the same manner as in Example 1 except that the overlapped portion was formed using ultrasonic sealing instead of the hot air sealing. In the present example, the ultrasonic sealing was carried out by providing the anvil on the inner circumferential surface side of the tubular body so as to come into contact with the inner circumferential surface side of the overlapped portion, and providing the ultrasonic horn on the outer circumferential surface side so as to come into contact with the outer circumferential surface of the overlapped portion. A groove was provided on the contact surface of the anvil in the longitudinal direction of the overlapped portion, and therefore two parallel sealed lines extending in the longitudinal direction were formed in the overlapped portion. For the sealing, the amplitude of the ultrasonic waves was set to 27 µm, the frequency was set to 40 kHz, the pressing force between the ultrasonic horn and the anvil was set to 50 N, and the output was set to 35 W.

### (Example 4)

A sealed package body was obtained in the same manner as in Example 1 except that the converged portion was tied using a propylene wire as in Example 2, the overlapped portion was formed using ultrasonic sealing as in Example 3, and the shape in the horizontally-sealed portion was set to the shape of two lines with rectangular holes therebetween (refer to Fig. 8A).

### (Example 5)

A sealed package body was manufactured in the same manner as in Example 4 except that the shape in the horizontally-sealed portion was set to the shape of three lines with rectangular holes therebetween (refer to Fig. 8B).

### (Example 6)

A sealed package body was manufactured in the same manner as in Example 4 except that the shape in the horizontally-sealed portion was set to the shape of two lines (refer to Fig. 8D).

### (Comparative Example 1)

A sealed package body was manufactured under the same conditions as in Example 1 except that the horizontally-sealed portions were not provided.

### (Comparative Example 2)

A sealed package body was manufactured under the same conditions as in Example 1 except that a 40 µm-thick vinylidene chloride-based resin was used as the synthetic resin film and the sealed portion was formed using a tape instead of providing the horizontally-sealed portions and the tying members made of an aluminum wire at both end portions.

The sealed portion in which a tape was used was formed by converging the vacant portion formed by pressing the content in a direction that traversed the flat surface, laying the tape so as to surround the converged vacant portion, sealing the vacant portion on which the tape was laid in the traverse direction together with the tape (first sealing), also, sealing the tape in a direction that intersects the first sealing (second sealing), and sealing the tape in the direction that intersects the first sealing on the opposite side of the converged vacant portion to the second sealing.

The shape of the used tape has a length of 18 mm, a width of 16 mm and a thickness of 80 µm, and a vinyl chloride-based resin, the same synthetic resin film as in the present comparative example, is used as the material. Sealing was carried out using ultrasonic sealing, and the oscillation frequency, the amplitude, the pressing force and the output were set to 40 kHz, 55 µm, 700 N and 300 W, respectively.

### (Comparative Example 3)

A sealed package body was manufactured under the same conditions as in Example 1 except that the converged portion was not tied using the tying member.

Examples 1 to 6 and Comparative Examples 1 to 3 obtained as described above were evaluated as described below. The evaluation results are described in Table 1.

### <Retort puncture (package breakage)>

1000 sealed package bodies were manufactured, and retort processing was carried out at 120°C for 30 minutes. After that, the number of the occurrence of retort punctures (package breakages) was counted. Table 1 describes the number of the occurrence of retort punctures (package breakages).

### <Ventilation after retort>

The positive side of a conduction tester was plugged in the center of the sealed package body that had been subjected to retort processing at 120°C for 30 minutes, and the negative side of the conduction tester and the sealed portions at both ends of the sealed package body were immersed in 5% saline solution, thereby checking whether the sealed package body allows electrical conduction. Table 1 describes the number of sealed package bodies in which electrical conduction was observed.

### <Occurrence of storage wrinkles>

The sealed package body that had been subjected to retort processing at 120°C for 30 minutes was stored under conditions of a temperature of 23°C and a humidity of 60%RH, and whether winkles occurred was evaluated through appearance inspection. Table 1 describes the number of storage days that wrinkles appeared.

### <Production rate>

For the above examples and comparative examples, the production rates of the sealed package bodies were evaluated. Table 1 describes the number of sealed package bodies produced per minute (shot number).

**[Table 1]**

| Evaluation items | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Sealing of overlapped portion | Hot air | Hot air | Ultrasonic wave | Ultrasonic wave | Ultrasonic wave | Ultrasonic wave | Hot air | Hot air | Hot air |
| Tying member | Metal | PP wire | Metal | PP wire | PP wire | PP wire | Metal | Metal | None |
| Presence of horizontally-sealed portion | Yes | Yes | Yes | Yes | Yes | Yes | No | No | Yes |
| Area ratio of horizontally-sealed portion (%) | 33 | 33 | 33 | 18 | 17 | 57 | - | - | 33 |
| Shape of horizontally-sealed portion | Net shape | Net shape | Net shape | Two lines with rectangular holes therebetween | Three lines with rectangular holes therebetween | Two lines | - | - | Net shape |
| Width of sealed line in horizontally-sealed portion (mm) | 0.3 | 0.3 | 0.3 | 0.4 | 0.2 | 1.5 | - | - | 0.3 |
| Retort puncture (package breakage) (packages/1000 packages) | 2 | 1 | 0 | 0 | 1 | 0 | 5 | 13 | 20 |
| Conduction after retort (package breakage) (packages/1000 packages) | 1 | 1 | 0 | 1 | 0 | 2 | 5 | 15 | 5 |
| Occurrence of storage wrinkles (days) | 90< | 90< | 90< | 90< | 90< | 90< | 90 | 90< | 90< |
| Production rate (shots/minute) | 180 | 180 | 180 | 180 | 180 | 150 | 180 | 120 | 180 |

### Industrial Applicability

According to the invention, a sealed package body that is sufficiently resistant to heating-induced damage during a production process and has excellent airtightness is provided. In addition, according to the invention, a production method and a production apparatus with which the sealed package body can be produced at a sufficient efficiency are provided.

### Reference Signs List

1 ··· SEALED PACKAGE BODY, 2 ··· TUBULAR FILM, 4 ··· VERTICALLY-SEALED PORTION, 5 ··· CONTENT, 6 ... HORIZONTALLY-SEALED PORTION, 7 ··· CONVERGED PORTION, 8 ··· TYING MEMBER, 10 ··· APPARATUS FOR PRODUCING SEALED PACKAGE BODIES, 111 ··· FILM SUPPLY MEANS, 12 ··· SYNTHETIC RESIN FILM, 133 ··· TUBULAR BODY, 144 ··· TUBULAR FILM COMPACT, 21 ··· FILLING MEANS, 31 ··· OVERLAPPED PORTION-FORMING MEANS, 41 ··· VERTICAL SEALING-FORMING MEANS (FIRST FUSION MEANS), 41' ··· VERTICAL ULTRASONIC FUSION MEANS (FIRST FUSION MEANS USING ULTRASONIC SEALING), 52 ··· SQUEEZING MEANS, 53 ··· HORIZONTAL SEALING-FORMING MEANS (SECOND FUSION MEANS), 54 ··· TYING MEMBER

### Embodiments

The present disclosure will now be described with regard to the following embodiments:
1. A sealed package body comprising:
   a first sealed portion that configures a tubular film, which is formed by bending a belt-like synthetic resin film in a tube shape so as to make both side edge portions of the film overlapped and fusing an overlapped portion in a longitudinal direction of the film, thereby storing a content;
   second sealed portions formed at both end portions of the tubular film and formed by fusing each inside surfaces of the tubular film across an entire length of the tubular film in a width direction; and
   tying members that are respectively formed at both end portions of the tubular film and tie both end portions that are converged together.
2. The sealed package body according to 1,
   wherein an area ratio of the second sealed portion to an entire area of an ear portion from an outside of the tying member to the end portion of the tubular film exceeds 5%.
3. The sealed package body according to 1 or 2,
   wherein a width of the second sealed portion is 0.1 mm to 6.0 mm.
4. The sealed package body according to any one of 1 to 3,
   wherein the second sealed portion includes at least one continuous sealed line across an entire length of the tubular film in the width direction.
5. The sealed package body according to 4,
   wherein a width of the sealed line is 0.1 mm to 2.0 mm.
6. The sealed package body according to any one of 1 to 5,
   wherein the second sealed portion is formed by fusing each inside surfaces of the tubular film in a net shape.
7. The sealed package body according to any one of 1 to 6,
   wherein the second sealed portion is formed using ultrasonic sealing.
8. The sealed package body according to any one of 1 to 7,
   wherein the tying member is made of a synthetic resin wire, and the wire forms a ring shape with end portions fused to each other.
9. A method for producing a sealed package body comprising:
   an overlapped portion-forming step of bending a belt-like synthetic resin film, thereby forming a tubular body in which both side edge portions of the film are overlapped;
   a first fusion step of fusing an overlapped portion of the tubular body in a longitudinal direction of the film, thereby forming a first sealed portion and obtaining a tubular film compact;
   a filling step of filling the tubular film compact with a content;
   a squeezing step of applying a force to the tubular film compact filled with the content from outside and continuously forming a flat portion below which the content is pressed in the tubular film compact at predetermined intervals;
   a second fusion step of adding heat to the flat portion and fusing each inside surfaces of the tubular film compact across an entire length of the tubular film compact in a width direction, thereby forming a second sealed portion; and
   a tying step of converging the tubular film compact in the second sealed portion or a vicinity of the second sealed portion, thereby forming a converged portion and tying the converged portion.
10. The method according to 9,
   wherein, in the second fusion step, the second sealed portion is formed so that an area ratio of the second sealed portion to an entire area of an ear portion from an outside of the tying member to an end portion of the tubular film exceeds 5%.
11. The method according to 9 or 10,
   wherein, in the second fusion step, a width of the second sealed portion is formed to be 0.1 mm to 6.0 mm.
12. The method according to any one of 9 to 11,
   wherein, in the second fusion step, the second sealed portion formed to include at least one continuous sealed line across an entire length of the tubular film in the width direction.
13. The method according to 12,
   wherein, in the second fusion step, a width of the sealed line is 0.1 mm to 2.0 mm.
14. The method according to any one of 9 to 13,
   wherein, in the second fusion step, the second sealed portion is formed by fusing each inside surfaces of the tubular film in a net shape.
15. The method according to any one of 9 to 14,
   wherein the second sealed portion is formed using ultrasonic sealing.
16. The method according to any one of 9 to 15,
   wherein, in the first fusion step, the first sealed portion is formed by being continuously sealed using ultrasonic sealing and being made up of at least one linear fused portion extending in the longitudinal direction of the tubular film.
17. The method according to any one of 9 to 16,
   wherein, in the tying step, a synthetic resin wire is disposed around the converged portion, and both end portions of the wire are fused.
18. An apparatus for producing a sealed package body, comprising:
   overlapped portion-forming means for bending a belt-like synthetic resin film, thereby forming a tubular body in which both side edge portions of the film are overlapped;
   first fusion means for fusing an overlapped portion of the tubular body, thereby forming a first sealed portion and obtaining a tubular film compact;
   filling means for filling the tubular film compact with a content;
   squeezing means for applying a force to the tubular film compact filled with the content from outside and continuously forming a flat portion below which the content is pressed in the tubular film compact at predetermined intervals;
   second fusion means for adding heat to the flat portion and fusing each inside surfaces of the tubular film compact across an entire length of the tubular film compact in a width direction, thereby forming a second sealed portion; and
   tying means for converging the tubular film compact in the second sealed portion or a vicinity of the second sealed portion, thereby forming a converged portion and tying the converged portion.
19. The apparatus according to 18,
   wherein the second fusion means forms the second sealed portion so that an area ratio of the second sealed portion to an entire area of an ear portion from an outside of the tying member to an end portion of the tubular film exceeds 5%.
20. The apparatus according to 18 or 19,
   wherein the second fusion means forms the second sealed portion in a width of 0.1 mm to 6.0 mm.
21. The apparatus according to any one of 18 to 20,
   wherein the second fusion step forms the second sealed portion so as to include at least one continuous sealed line across an entire length of the tubular film in the width direction.
22. The apparatus according to 21,
   wherein the second fusion means forms the sealed line in a width of 0.1 mm to 2.0 mm.
23. The apparatus according to any one of 18 to 22,
   wherein the second fusion means fuses each inside surfaces of the tubular film in a net shape, thereby forming the second sealed portion.
24. The apparatus according to any one of 18 to 23,
   wherein the second sealed means includes means for forming the second sealed portion in the flat portion using ultrasonic sealing.
25. The apparatus according to any one of 18 to 24,
   wherein the first fusion means is means for forming the first sealed portion using a hemispherical anvil and an ultrasonic horn, and forms at least one linear fused portion extending in the longitudinal direction of the tubular film.
26. The apparatus according to any one of 18 to 25,
   wherein the tying means includes means for disposing a synthetic resin wire around the converged portion, and fusing both end portions of the wire.

## Claims

1. A sealed package body comprising:
a first sealed portion that configures a tubular film, which is formed by bending a belt-like synthetic resin film in a tube shape so as to make both side edge portions of the film overlapped and fusing an overlapped portion in a longitudinal direction of the film, thereby storing a content;
second sealed portions formed at both end portions of the tubular film and formed by fusing each inside surfaces of the tubular film across an entire length of the tubular film in a width direction; and
tying members that are respectively formed at both end portions of the tubular film and tie both end portions that are converged together, wherein the second sealed portion is formed by fusing each inside surfaces of the tubular film in a net shape.

2. The sealed package body according to Claim 1,
wherein an area ratio of the second sealed portion to an entire area of an ear portion from an outside of the tying member to the end portion of the tubular film exceeds 5%.

3. The sealed package body according to Claim 1 or 2,
wherein a width of the second sealed portion is 0.1 mm to 6.0 mm.

4. The sealed package body according to any one of Claims 1 to 3,
wherein the second sealed portion includes at least one continuous sealed line across an entire length of the tubular film in the width direction.

5. The sealed package body according to Claim 4,
wherein a width of the sealed line is 0.1 mm to 2.0 mm.

6. The sealed package body according to any one of Claims 1 to 5,
wherein the second sealed portion is formed using ultrasonic sealing.

7. The sealed package body according to any one of Claims 1 to 6,
wherein the tying member is made of a synthetic resin wire, and the wire forms a ring shape with end portions fused to each other.

8. A method for producing a sealed package body comprising:
an overlapped portion-forming step of bending a belt-like synthetic resin film, thereby forming a tubular body in which both side edge portions of the film are overlapped;
a first fusion step of fusing an overlapped portion of the tubular body in a longitudinal direction of the film, thereby forming a first sealed portion and obtaining a tubular film compact;
a filling step of filling the tubular film compact with a content;
a squeezing step of applying a force to the tubular film compact filled with the content from outside and continuously forming a flat portion below which the content is pressed in the tubular film compact at predetermined intervals;
a second fusion step of adding heat to the flat portion and fusing each inside surfaces of the tubular film compact across an entire length of the tubular film compact in a width direction, thereby forming a second sealed portion; and
a tying step of converging the tubular film compact in the second sealed portion or a vicinity of the second sealed portion, thereby forming a converged portion and tying the converged portion, wherein, in the second fusion step, the second sealed portion is formed by fusing each inside surfaces of the tubular film in a net shape.

9. The method according to Claim 8,
wherein, in the second fusion step, the second sealed portion is formed so that an area ratio of the second sealed portion to an entire area of an ear portion from an outside of the tying member to an end portion of the tubular film exceeds 5%.

10. The method according to Claim 8 or 9,
wherein, in the second fusion step, a width of the second sealed portion is formed to be 0.1 mm to 6.0 mm.

11. The method according to any one of Claims 8 to 10,
wherein, in the second fusion step, the second sealed portion formed to include at least one continuous sealed line across an entire length of the tubular film in the width direction.

12. The method according to Claim 11,
wherein, in the second fusion step, a width of the sealed line is 0.1 mm to 2.0 mm.

13. The method according to any one of Claims 8 to 12,
wherein the second sealed portion is formed using ultrasonic sealing.

14. The method according to any one of Claims 8 to 13,
wherein, in the first fusion step, the first sealed portion is formed by being continuously sealed using ultrasonic sealing and being made up of at least one linear fused portion extending in the longitudinal direction of the tubular film.

15. The method according to any one of Claims 8 to 14,
wherein, in the tying step, a synthetic resin wire is disposed around the converged portion, and both end portions of the wire are fused.

16. An apparatus for producing a sealed package body, comprising:
overlapped portion-forming means for bending a belt-like synthetic resin film, thereby forming a tubular body in which both side edge portions of the film are overlapped;
first fusion means for fusing an overlapped portion of the tubular body, thereby forming a first sealed portion and obtaining a tubular film compact;
filling means for filling the tubular film compact with a content;
squeezing means for applying a force to the tubular film compact filled with the content from outside and continuously forming a flat portion below which the content is pressed in the tubular film compact at predetermined intervals;
second fusion means for adding heat to the flat portion and fusing each inside surfaces of the tubular film compact across an entire length of the tubular film compact in a width direction, thereby forming a second sealed portion; and
tying means for converging the tubular film compact in the second sealed portion or a vicinity of the second sealed portion, thereby forming a converged portion and tying the converged portion, wherein the second fusion means fuses each inside surfaces of the tubular film in a net shape, thereby forming the second sealed portion.

17. The apparatus according to Claim 16,
wherein the second fusion means forms the second sealed portion so that an area ratio of the second sealed portion to an entire area of an ear portion from an outside of the tying member to an end portion of the tubular film exceeds 5%.

18. The apparatus according to Claim 16 or 17,
wherein the second fusion means forms the second sealed portion in a width of 0.1 mm to 6.0 mm.

19. The apparatus according to any one of Claims 16 to 18,
wherein the second fusion meansforms the second sealed portion so as to include at least one continuous sealed line across an entire length of the tubular film in the width direction.

20. The apparatus according to Claim 19,
wherein the second fusion means forms the sealed line in a width of 0.1 mm to 2.0 mm.

21. The apparatus according to any one of Claims 16 to 20,
wherein the second sealed means includes means for forming the second sealed portion in the flat portion using ultrasonic sealing.

22. The apparatus according to any one of Claims 16 to 21,
wherein the first fusion means is means for forming the first sealed portion using a hemispherical anvil and an ultrasonic horn, and forms at least one linear fused portion extending in the longitudinal direction of the tubular film.

23. The apparatus according to any one of Claims 16 to 22,
wherein the tying means includes means for disposing a synthetic resin wire around the converged portion, and fusing both end portions of the wire.
